Europäisches Patentamt

European Patent Office

Office européen des brevets

(19)

(11) Veröffentlichungsnummer: **0 223 076**
**B1**

# (12) EUROPÄISCHE PATENTSCHRIFT

(45) Veröffentlichungstag der Patentschrift:
07.02.90

(21) Anmeldenummer: 86114356.8

(22) Anmeldetag: 16.10.86

(51) Int. Cl.⁴: **B23K 11/36, B25J 9/08**

(54) Vollautomatisches Robotersystem.

(30) Priorität: 19.10.85 DE 3537326

(43) Veröffentlichungstag der Anmeldung:
27.05.87 Patentblatt 87/22

(45) Bekanntmachung des Hinweises auf die Patenterteilung:
07.02.90 Patentblatt 90/6

(84) Benannte Vertragsstaaten:
AT BE CH DE ES FR GB IT LI NL SE

(56) Entgegenhaltungen:
EP-A- 0 145 891
DE-A- 2 852 502

TECHNISCHE MITTEILUNGEN, Band 78, Heft 8,
August 1985, Seiten 401-408, Essen; F.J. LANGE
"Industrieroboter zum Widerstands-Punktschweissen"

(73) Patentinhaber: Messerschmitt-Bölkow-Blohm
Gesellschaft mit beschränkter Haftung,
Robert-Koch-Strasse, D-8012 Ottobrunn(DE)
Patentinhaber: Bayerische Motoren Werke
Aktiengesellschaft, Patentabteilung
AJ-3 Postfach 40 02 40 Petuelring 130,
D-8000 München 40(DE)

(72) Erfinder: Weiser, Klaus, Am Neubruch 8,
D-8081 Grafrath(DE)
Erfinder: Udelhoven, Dieter, Münchner Strasse 19,
D-8048 Haimhausen(DE)
Erfinder: Handke, Günter, Loidinger Strasse 18a,
D-8107 Irschenberg(DE)
Erfinder: Handke, Erich, Frankenstrasse 10,
D-8933 Untermeitingen(DE)

## Beschreibung

Die Erfindung bezieht sich auf ein vollautomatisches Punktschweiß-, Niet- oder Verschraubungs-Robotersystem.

Solche Systeme sind in verschiedenen Ausführungen aus "Technische Mitteilungen", 78. Jhrg., Heft 8, August 1985, Seiten 401–408 bekannt, wobei im wesentlichen die Unterkupfer-Elektroden als konturgebende Auflage im Schweißwerkzeug fest eingeplant ist und ein Stand- oder Portal-Roboter mit freiprogrammierbarer Steuerung die aktive Bewegung mit der Schweißelektrode ausführt. Diese Systeme sind damit in der Regel typenspezifisch ausgelegt.

Ebenso typenspezifisch sind die in der DE-A1 2 920 768 und EP-A1 0 145 891 offenbarten Arbeitsautomaten. In der erstgenannten Ausführungsform ist die Konstruktion darauf gerichtet, Reaktionskräfte aufzunehmen ohne daß Verformungen im Arbeitsautomat auftreten und im letztgenannten Fall wird ein Arbeitsautomat für große Werkstücke offenbart, der mit einem Abtastfinger ausgerüstet ist. Ein flexibler Einsatz ist ohne großen Umrüstungsaufwand mit den vorgenannten Anlagen nicht möglich.

Der vorliegenden Erfindung liegt die Aufgabe zugrunde, ein Robotersystem der eingangs genannten Art zu schaffen, das im Aufbau und Funktion einen flexibleren Einsatz ermöglicht, den Elektrodenwechsel automatisiert und ohne großen Umrüstungsaufwand für andere Bauteiltypen einsetzbar ist. Dies gilt für die obengenannten Fügeverfahren.

Diese Aufgabe wird durch die im Anspruch 1 aufgezeigten Maßnahmen gelöst. In den Unteransprüchen sind vorteilhafte Ausgestaltungen angegeben, und in der nachfolgenden Beschreibung ist ein Ausführungsbeispiel erläutert sowie in den Figuren der Zeichnung dargestellt. Es zeigen:

Fig. 1 eine Frontansicht des kompletten Systems inklusiv des Standard-Roboters,

Fig. 2 eine Seitenansicht des mit der Elektrode an das Werkstück geführten Sonder-Roboters mit der Prüfoptik für den geometrischen Zustand der Elektroden,

Fig. 3 eine Draufsicht auf das komplette System gemäß Fig. 1, jedoch ohne den Standard-Roboter,

Fig. 4 eine schematische Darstellung einer Einzelwechselstation für die Elektroden.

Am Beispiel einer Unterkupfer-Schweißanlage soll die Erfindung erläutert werden. Das nachfolgend beschriebene Ausführungsbeispiel ist schematisch in den Figuren der Zeichnung dargestellt.

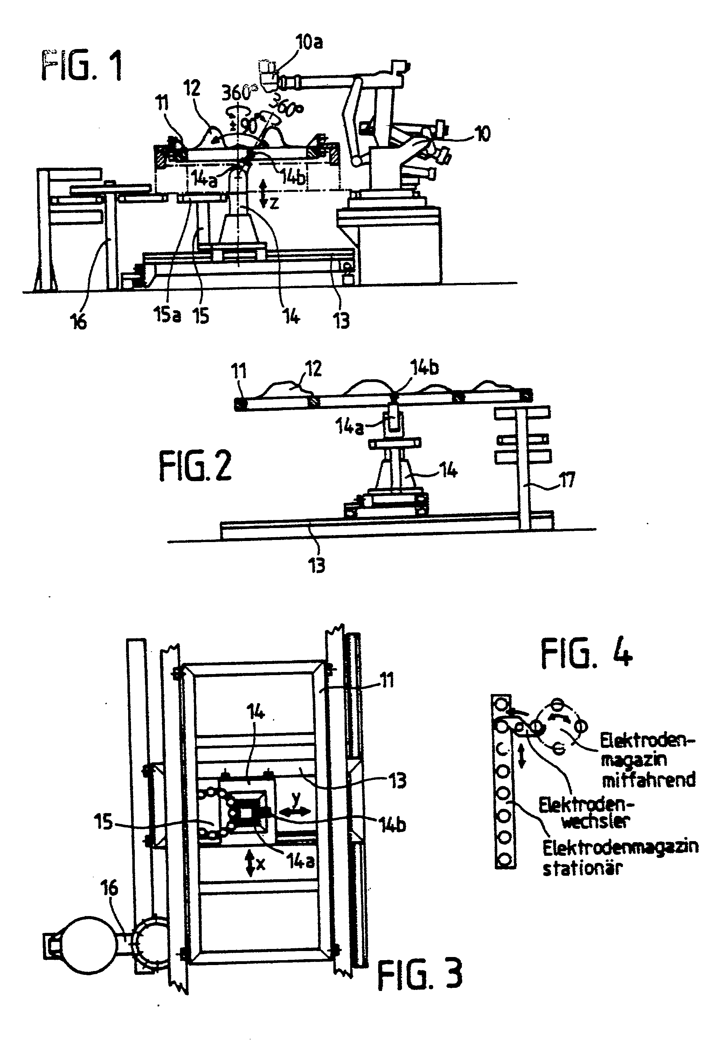

Die Fig.1 und 3 zeigt das aus im wesentlichen fünf Baugruppen bestehende System, das an die Stelle der bisher eingesetzten ortsfesten, d.h. in einem WZ-integrierten typenspezifischen Unterkupferleisten treten soll.

Einem handelsüblichen, als Punktschweißgerät ausgebildeten Standard-Roboter 10 mit auswechselbarer Punktschweißeinrichtung 10a ist ein modulartig, rasterförmig aufgebauter Standardrahmen 11 für die Aufnahme von verschiedenartig geformten und maßunterschiedlichen Werkstücken 12 zugeordnet. Dieser Standardrahmen ist in bekannter Weise innerhalb der Fertigungsstraße verfahrbar und er nimmt die Kraft des Punktschweiß- bzw. Standard- oder Unterkupfer-Roboters 10, 14 auf. In ihm sind die notwendigen Energie- Verteilungs- und Speichersysteme für die Spannelemente des zu bearbeitenden Werkstückes 12 integriert. Diese dem jeweiligen Werkstück entsprechend gestalteten Spannelemente (nicht gezeichnet) bzw. Spannvorrichtungen sind mit dem Energieversorgungsnetz des Rahmens verbunden.

Im Bereich unterhalb dieses Standard-Rahmens 11 befindet sich ein schienengeführtes, am Boden laufendes Portal 13, mit einem darauf verfahrbaren und in die sieben Freiheitsgrade positionier- und einstellbaren Sonder-Roboter 14, der mit einem oder mehreren Haltern 14a für die als Unterkupfer-Formteile ausgebildeten Elektroden 14b bestückt ist. Wie aus der Zeichnung ersichtlich, ist der Sonder-Roboter 14 mit einem Fahrwerk für die x- und y-Achse ausgerüstet sowie mit einer in der z-Achse beweglichen Säule, die gegebenenfalls auch noch um die Horizontalachse drehbar ist, versehen und am Ende dieser Säule ist der Halter 14a so beweglich angeordnet, daß die x-, y-, und z-Koordinaten bzw. diejenigen um die Horizontalachse einstellbar sind.

Diesem Sonder-Roboter 14 ist nun ein oder mehrere Elektroden-Magazinträger 15 beigeordnet. So ein Magazinträger 15 kann entweder fest am Fahrwerk oder Rahmen etc. des Sonder-Roboters 14 befestigt sein, oder er ist selbst mit einem Fahrwerk versehen. In jedem Falle ist der Magazinträger 15 elektronisch programmierbar und steuerbar und ist beispielsweise als Drehteller- oder Revolversystem ausgebildet. Auch eine Ausbildung als Durchschub-Wechselsystem ist vorgesehen.

In speziellen Ausführungsformen kann jederzeit auf das eine oder andere Elektrodensystem umgerüstet werden. Im hier beschriebenen Beispiel ist nun diesem Elektrodenträger 15 weiterhin eine Wechselstation 16 zugeordnet, in der Ersatzdrehteller bzw. Revolveranordnungen automatisch gesteuert zur Auswechslung bereitstehen. Der Sonder-Roboter 14 ist über eine Schaltbrücke (nicht gezeichnet) mit dem Standard-Roboter 10, aber auch mit dem Elektrodenträger 15 und der Wechselstation 16 elektronisch verbunden. Über diese Schaltbrücke errechnet er aus den Koordinaten des Standard-Roboters 10 seine Soll-Koordinaten zur Nachführung der als Unterkupferformteile ausgebildeten Elektroden 14b und vermittelt nach vollzogener Positionierung der letzteren dem Standard-Roboter 10 das Aktivierungskommando.

Der jeweilige Halter 14a der Elektroden 14b ist mit integrierten Berührungs- und/oder Kraftsensoren für den Kontakt am Werkstück 12 versehen und kann außerdem mit einer Wechselvorrichtung für die Einzelelektrode, die - erwähnt - als Unterkupfer-Formteil ausgebildet ist, ausgerüstet sein. Auch die Wechselstation 16 kann mit einer Wechselvorrichtung für die Einzelelektroden 14b bestückt sein. Es versteht sich von selbst, daß all die vorgenannten Einrichtungen von der Systemelektronik programmgemäß gesteuert werden.

Der vorbeschriebenen Anlage ist weiterhin eine Prüfoptik 17 - wie in Fig. 2 der Zeichnung schematisch dargestellt - zur Überwachung des geometrischen Zustandes der Elektroden zugeordnet. Auch diese Optik ist mit der elektronischen Steuerung des Systems verbunden und gibt das Signal an die Elektrodenauswechseleinheit, wenn eine Auswechselung erforderlich ist. Bei der hier beschriebenen Ausführungsform ist sowohl eine Einzelauswechslung der Elektroden als auch eine Komplett-Auswechslung, also des gesamten Teller- oder Revolversystems, gegeben.

Der Aufbar der elektronischen Steuerung ist komplett mit den heute allgemein erhältlichen elektronischen Bausteinen problemlos möglich, die Programmeingabe in den Prozessor ist ebenfalls jedem Durchschnittsfachmann geläufig, so daß hierüber keine Einzelheiten gegeben werden müssen. Auch die erwähnte Schaltbrücke zu dem Standard-Roboter 10 ist ohne weiteres herzustellen. Erwähnt sei hierzu lediglich, daß die Steuerungselektronik auch die Standzeitüberwachung je Elektrode mit punktezahl-abhängigem Wechsel der jeweiligen Elektrode durchführt und daß aus dem Programm des Standard-Roboters 10 automatisch das Nachführungsprogramm des Sonder-Roboters 14 erstellt wird.

Nun hat es sich gezeigt, daß das vorbeschriebene System ohne großen Umrüstungsaufwand in ein System zum Quetschnieten an großflächigen Werkstücken oder in ein System zum Schraubverbinden umgebaut werden kann. Im ersten Falle wird der Elektrodenteller mit einem einsetzbaren Nietzuführ- und Haltebehälter ausgetauscht und beim Standard-Roboter die Punktschweißeinrichtung gegen eine Bohr-, Druck- und Quetscheinrichtung ausgewechselt. Bei einem Verschraubungssystem übernimmt jeweils der Standard-Roboter 10, der je nach Einsatzfall sowohl als Stand- wie auch als Portal-Roboter ausgebildet sein kann, und der Sonder-Roboter 14 entweder die Schraube oder die Mutter. Die entsprechenden Halte-, Zuführ- und Drehvorrichtungen sind jeweils in die systemgleichen Aufnahmen der einzelnen Roboter einsetzbar.

In allen Fällen ist hiermit ein vielseitig verwendbares System geschaffen worden, bei dem ein Sonder-Roboter die Koordinaten der sieben Freiheitsgrade zeitlich parallel zum Standard-Roboter auf einer vorgebbaren Bahn anfährt und jeweils bei Erreichung der Soll-Position das Freigabe- bzw. Aktivierungssignal an den Standard-Rotober gibt.

**Patentansprüche**

1. Vollautomatisches Punktschweiß- oder Niet- oder Verschraubungs-Robotersystem, bei dem einem Standard-Roboter (10) mit auswechselbarer Punktschweiß- oder Niet- oder Verschraubeinrichtung (10a) mit freiprogrammierbarer Steuerung, die die aktive Bewegung der Einrichtung (10a) ausführt, ein modularer, rasterförmiger Standard-Rahmen (11) für die Aufnahme eines Werkstückes (12) und ein bodenlaufendes, schienengeführtes Portal (13) mit einem darauf verfahrbaren Sonder-Roboter (14), der als Elektroden- oder Niet- bzw. Verschraubungselemententräger (14a) siebenachsen-programmierbar ausgebildet ist, zugeordnet sind und diesem Sonder-Roboter (14) ein oder mehrere verfahrbare, elektronisch programmier- und steuerbare Elektroden- oder Niet- oder Verschraubungselementen-Magazinträger (15) sowie eine elektronische Schaltbrücke zum Standard-Roboter (10) beigegeben sind, wobei über die Schaltbrücke aus den Koordinaten des letzteren die Sollkoordinaten des Sonder-Roboters (14) errechnet werden, der sich und damit die von seinem Elemententräger (14a) getragenen Elemente (14b) der Einrichtung (10a) des Standard-Roboters nachführt und anschließend dem Standard-Roboter (10) das Schweiß- bzw. Niet- oder Schraubkommando übermittelt bzw. diesen zur Schweißung, Nietung oder Verschraubung aktiviert, so daß beide Roboter eine Punktschweiß-, Niet- oder Verschraubungseinheit an dem zwischen ihrer Einrichtung (10a) bzw. Elemententräger (14a) liegenden Werkstück (12) zusammen durchführen.

2. System nach Anspruch 1, wobei die getragenen Elemente (14b) mit integrierten Berührungs- und/oder Kraftsensoren für den Kontakt am Werkstück (12) ausgerüstet sind.

3. System nach den Anspruch 1, wobei der Elektroden- oder Niet- oder Verschraubungselementen-Magazinträger (15) im Sonder-Roboter (14) als Drehteller- bzw. Revolversystem oder als Durchschub-Wechselsystem ausgebildet ist.

4. System nach einem oder mehreren der Ansprüche 1 bis 3, wobei dem Elektroden- oder Niet- oder Verschraubelement-Magazinträger (15) eine Wechselstation (16) für die Elektroden-, Nieten- oder Schraubenmagazine (15a) zugeordnet ist.

5. System nach Anspruch 4, wobei die Wechselstation (16) eine Wechselvorrichtung für Einzelelektroden aufweist.

6. System nach Anspruch 5, wobei die elektronische Steuerung des Standard-Roboters (10) die Schweißpunktzählung je Elektrode durchführt und der Elektrodenwechsel gesteuert wird.

7. System nach Anspruch 4, wobei dem in Aktion befindlichen Elektrodenmagazin (15a) und dem Halter (14a) eine Einzelwechselstation für die Elektroden (14b) zugeordnet ist.

**Claims**

1. A fully-automatic spot-welding or riveting or screwing robot system, in the case of which a standard robot (10) having an exchangeable spot-welding or riveting or screwing mechanism (10a) having freely-programmable control which performs the active movement of the mechanism (10a), a modular raster-shaped standard frame (11) for the reception of a workpiece (12) and a floor-running rail-guided gantry (13) is associated with a special robot (14), displaceable thereon, which is designed in a seven-axially-programmable manner as electrode or riveting or screwing element carrier (14a) and added to this special robot (14) are one or more mobile, electronically programmable and controllable electrode or riveting or screwing element magazine carriers (15) as well as an electronic switching bridge to the standard robot (10), in which respect by way of the switching bridge and from the coordinates of the latter the desired co-ordinates of the special robot (14) are calculated, which re-conducts itself and thus the elements (14b) carried by its element carrier (14a), to the device (10a) of the standard robot and then transmits the welding or riveting or screwing command to the standard robot (10) or respectively activates this latter for the welding, riveting or screwing, so that both robots carry out together a spot-welding, riveting or screwing operation on the workpiece (12) lying between their device (10a) or respectively element carrier (14a).

2. A system according to claim 1, the carried elements (14b) being equipped with integrated contact and/or force sensors for the contact against the workpiece (12).

3. A system according to claim 2, the electrode or riveting or screwing element magazine carrier (15) in the special robot (14) being designed as a rotary-plate or respectively turret system or as a push-through changing system.

4. A system according to one or more of claims 1 to 3, a changing station (16) for the electrode, rivet or screw magazines (15a) being associated with the electrode or riveting or screwing element magazine carrier (15).

5. A system according to claim 4, the changing station (16) having a changing device for individual electrodes.

6. A system according to claim 5, the welding-spot counting per electrode being carried out, and the electrode change being controlled, by the electronic control of the standard robot (10).

7. A system according to claim 4, an individual changing station for the electrodes (14b) being associated in action with the electrode magazine (15a) and with the holder (14a).

**Revendications**

1. Système robotique entièrement automatique de soudage par points, de rivetage ou de vissage, dans lequel sont associés à un robot standard (10) comportant un dispositif (10a) échangeable de soudage par points, de rivetage ou de vissage à commande librement programmable, qui effectue le mouvement actif du dispositif (10a), un cadre standard (11) modulaire en forme de trame pour la réception d'une pièce (12) et un portique (13) guidé sur rails et se déplaçant au sol avec un robot spécial (14), déplaçable sur ce portique et réalisé en tant que support (14a) d'électrodes ou d'éléments de rivetage ou de vissage de manière programmable suivant sept axes, et sont associés à ce robot spécial (14) un ou plusieurs supports (15), déplaçables et électroniquement programmables et commandables, de magasin d'électrodes ou d'éléments de rivetage ou de vissage ainsi qu'un pont de communication électronique vers le robot standard (10), le pont de commutation permettant de calculer à partir des coordonnées du robot standard des coordonnées de consigne du robot spécial (14) qui se repositionne lui-même et donc les éléments (14b) portés par son support d'éléments (14a) en fonction de la position du dispositif (10a) du robot standard et transmet ensuite au robot standard (10) l'ordre de soudage, de rivetage ou de vissage ou active ce dernier pour le soudage, le rivetage ou le vissage, de sorte que les deux robots effectuent ensemble un travail de soudage par points, de rivetage ou de vissage sur la pièce (12) se trouvant entre leur dispositif (10a) et support d'éléments (14a).

2. Système selon la revendication 1, les éléments (14b) portés étant munis de capteurs de contact et/ou de force intégrés pour le contact avec la pièce (12).

3. Système selon la revendication 1, le support (15) de magasin d'électrodes ou d'éléments de rivetage ou de vissage dans le robot spécial (14) étant réalisé comme système à plateau tournant ou revolver ou comme système de changement poussant.

4. Système selon l'une ou plusieurs des revendications 1 à 3, un poste de changement (16) pour les magasins (15a) d'électrodes, de rivets ou de vis étant associé au support (15) de magasin d'électrodes ou d'éléments de rivetage ou de vissage.

5. Système selon la revendication 4, le poste de changement (16) étant muni d'un dispositif de changement pour électrodes individuelles.

6. Système selon la revendication 5, la commande électronique du robot standard (10) effectuant le comptage des points de soudage par électrode et commandant le changement d'électrode.

7. Système selon la revendication 4, un poste de changement individuel pour les électrodes (14b) étant associé au magasin d'électrodes (15a) se trouvant en action et au support (14a).

FIG. 1

10a

11  12

360°  360°
90°

14a  14b

z

16  15a  15  14  13

FIG. 2

11  12  14b

14a

14

17

13

FIG. 4

Elektrodenmagazin
mitfahrend

Elektrodenwechsler

Elektrodenmagazin
stationär

11

14

13

15

y

14b

14a

x

16

FIG. 3